# EUROPÄISCHE PATENTSCHRIFT

(11) **EP 0 896 851 B1**
(45) Veröffentlichungstag und Bekanntmachung des Hinweises auf die Patenterteilung: **07.05.2008**
(21) Anmeldenummer: 98113364.8
(22) Anmeldetag: 17.07.1998
(51) Int. Cl.: B23K 26/12

(54) **Laserbearbeitungsmaschine mit Gasausgleichsvolumen**
Laser machining machine with gas compensating volume
Machine d'usinage au laser avec volume de compenstation de gaz

(30) Priorität: 13.08.1997 DE 29714489 U
(43) Veröffentlichungstag der Anmeldung: 17.02.1999
(73) Patentinhaber: TRUMPF Werkzeugmaschinen GmbH + Co. KG, 71254 Ditzingen (DE)
(72) Erfinder: Weick, Jürgen-Michael, 71679 Asperg (DE)
(74) Vertreter: Kohler Schmid Möbus

(56) Entgegenhaltungen:
- EP-A- 0 749 800
- PATENT ABSTRACTS OF JAPAN vol. 008, no. 158 (M-311), 21. Juli 1984 (1984-07-21) & JP 59 054484 A (MITSUBISHI DENKI KK), 29. März 1984 (1984-03-29)

## Beschreibung

Die Erfindung betrifft eine Laserbearbeitungsmaschine mit wenigstens einem Lasergenerator gemäß dem Oberbegriff des Anspruchs 1.

Sowohl die Intensität als auch die Form eines Laserstrahls wird durch in dem Strahlweg befindliche, die Wellenlänge des Gaslasers absorbierende Gase, beispielsweise kohlenwasserstoffhaltige Gase negativ beeinflußt. Die sich ergebenden Beeinträchtigungen erreichen insbesondere im Falle von Laserbearbeitungsmaschinen, an welchen der Laserstrahl eine verhältnismäßig lange Strecke zwischen dem Lasergenerator und dem Bearbeitungskopf zurückzulegen hat, ein beachtliches Ausmaß. Zur Vermeidung derartiger Beeinträchtigungen wird der Laserstrahl üblicherweise durch einen Strahlführungsraum der Laserbearbeitungsmaschine geleitet, der mit einem Gas ohne schädliche Verunreinigungen gefüllt ist.

Aus der Druckschrift DE-U-295 09 648 ist eine gattungsgemäße Maschine bekannt, an welcher der Gasraum von Faltenbälgen begrenzt wird. Ein Teil des Gasraumes dient dabei als Strahlführungsraum, ein weiterer Teil als mit dem Strahlführungsraum verbundener Nebenraum, der von dem Laserstrahl nicht durchsetzt wird, gleichwohl aber mit Gas gefüllt ist. Über eine Strömungsverbindung ist der Gasraum an ein Gasausgleichsvolumen in einem Gasvorratsbehälter angeschlossen, der mit unter Überdruck stehendem Gas gefüllt ist. Das Gas aus dem Gasvorratsbehälter wird an einem Ende des Gasraums in diesen aufgegeben und verläßt den Gasraum an dessen der Aufgabestelle gegenüberliegendem Ende durch eine entsprechende Austrittsöffnung. Auf diese Art und Weise wird der Gasraum permanent mit Gas einer gewünschten Zusammensetzung durchspült und von Verunreinigungen freigehalten. Allerdings ist der Betrieb der vorbekannten Maschine mit einem erheblichen Gasverbrauch verbunden.

Eine weitere Laserbearbeitungsmaschine ist in JP-A-59 054 484 offenbart. Diese vorbekannte Maschine weist ebenfalls an beiden in Bewegungsrichtung gelegenen Seiten eines Laserbearbeitungskopfes jeweils einen gasgefüllten Faltenbalg auf. Die beiden Faltenbälge sind untereinander strömungsverbunden. Jeder der Faltenbälge bildet bei Bewegung des Laserbearbeitungskopfes für den jeweils anderen Faltenbalg ein Gasausgleichsvolumen. Gegen die Umgebung der Maschine sind die beiden Faltenbälge hermetisch abgedichtet.

Die Funktionsfähigkeit gattungsgemäßer Maschinen zu verbessern, hat sich die vorliegende Erfindung zum Ziel gesetzt.

Erfindungsgemäß gelöst wird diese Aufgabe durch eine Laserbearbeitungsmaschine gemäß Anspruch 1. Das kennzeichnende Anspruchsmerkmal gewährleistet die Funktionsfähigkeit der mit einem geschlossenen Gasraum mit zumindest teilweise faltbarer Gasraumwand versehenen Maschine. So sind mit der aufgrund der Relativbewegung von Lasergenerator und Bearbeitungskopf erfolgenden Faltung bzw. Entfaltung der Gasraumwand größenmäßige Schwankungen des Gasraumvolumens verbunden. Das auf die Falten der Gasraumwand entfallende Teilvolumen des Gasraum-Gesamtvolumens ändert sich nämlich in Abhängigkeit von dem Grad der Faltung und ist etwa bei Vorliegen enger Falten mit nahe beieinanderliegenden Faltenwänden kleiner als in Betriebssituationen, in denen die Falten der Gasraumwand geöffnet sind und die Faltenwände dementsprechend verhältnismäßig weit auseinander liegen. Mit den beschriebenen Volumenschwankungen verbunden wären entsprechende Schwankungen des in dem geschlossenen Gasraum herrschenden Innendrucks. Eine Volumenabnahme führte zu einer Druckerhöhung, eine Volumenzunahme zu einer Drucksenkung. Im Falle einer Druckerhöhung auch im Millibarbereich könnten die Falten der Gasraumwand nach außen gestülpt werden, wodurch wiederum eine ordnungsgemäße Faltenbildung behindert würde. Eine Zunahme des Gasraumvolumens in einem entsprechenden Ausmaß könnte eine Absenkung des Gasraum-Innendruckes auf ein Niveau unterhalb des in der Umgebung der Laserbearbeitungsmaschine herrschenden Druckes zur Folge haben. Bei gleichzeitigem Vorhandensein von Leckstellen des Gasraumes wäre zu befürchten, daß aufgrund dieses Unterdruckes mit schädlichen Gasen verunreinigte Atmosphäre aus der Umgebung der Laserbearbeitungsmaschine in deren Gasraum und somit in deren Strahlführungsraum angesaugt würde. Mittels des erfindungsgemäßen Gasausgleichsvolumens nun lassen sich die beschriebenen Negativerscheinungen vermeiden. Nimmt nämlich das Gasraumvolumen aufgrund einer Vergrößerung des auf die Falten der Gasraumwand entfallenden Teilvolumens infolge der Relativbewegung von Bearbeitungskopf und Lasergenerator zu, so wird diese Volumenzunahme ausgeglichen durch Entnahme eines entsprechenden Gasvolumens aus dem Gasausgleichsvolumen, das sich folglich verkleinert. Andererseits führt eine Verkleinerung des Gasraumvolumens infolge einer Verkleinerung des Faltenvolumens im Betrieb der Laserbearbeitungsmaschine dazu, daß Gas aus dem Gasraum in das Gasausgleichsvolumen verdrängt wird und sich letzteres dadurch vergrößert. Somit ist an erfindungsgemäßen Laserbearbeitungsmaschinen sichergestellt, daß der Innendruck des Gasraums ungeachtet der Relativbewegung von Bearbeitungskopf und Lasergenerator stets denselben Wert beibehält. Aufgrund der Verwendung eines abgeschlossenen Gasraumes entfällt die Notwendigkeit einer dauerhaften und umfangreichen Gaszufuhr. Gas ist in den Gasraum allenfalls zum Ausgleich von Leckageverlusten aufzugeben.

Die Variabilität des Gasausgleichsvolumens wird in bevorzugter Ausgestaltung der Erfindung dadurch realisiert, daß das Gasausgleichsvolumen von wenigstens einem Volumenausgleichsbehälter mit verformbarer Behälterwand gebildet ist.

Aus demselben Grund ist erfindungsgemäß zusätzlich oder alternativ zu der Verformbarkeit der Behälterwand vorgesehen, daß das Gasausgleichsvolumen von wenigstens einem Volumenausgleichsbehälter gebildet ist, an welchem zumindest ein Teil der Behälterwand relativ zu wenigstens einem anderen Teil der Behälterwand beweglich ist. In diesem Zusammenhang denkbar ist beispielsweise ein Volumenausgleichsbehälter in Form einer Kolben-Zylinder-Einheit, deren Kolben mit der Faltung oder Entfaltung der faltbaren Gasraumwand unter Vergrößerung oder Verkleinerung des Zylindervolumens verschoben wird.

Zum Ausgleich von Druckverlusten, die sich beim Einströmen von Gas des Gasausgleichsvolumens in den Gasraum ergeben können, sieht die Erfindung zweckmäßigerweise vor, daß der Volumenausgleichsbehälter an der Behälterwand von außen kraftbeaufschlagt ist. An erfindungsgemäßen Laserbearbeitungsmaschinen mit geschlossenem Gasraum läßt sich durch die beschriebene Kraftbeaufschlagung der Behälterwand des Volumenausgleichsbehälters außerdem auch im Innern des mit dem Volumenausgleichsbehälter verbundenen Gasraumes ein Überdruck erzeugen, der derart bemessen ist, daß der Gasrauminnendruck auch bei einer Vergrößerung des Gasraumvolumens infolge einer Vergrößerung des Faltenvolumens der Gasraumwand keine Werte erreicht, die unterhalb des Umgebungsdrucks der Laserbearbeitungsmaschine, in aller Regel des Atmosphärendrucks, liegen.

Mit einer konstruktiv einfachen Maßnahme wird die gewünschte Kraftbeaufschlagung der Behälterwand des Volumenausgleichsbehälters im Falle einer bevorzugten Ausführungsform der erfindungsgemäßen Laserbearbeitungsmaschine durch Verwendung eines Auflagegewichts erzielt.

Alternativ oder ergänzend kann die Behälterwand des Volumenausgleichsbehälters im Sinne der Erfindung mittels einer steuerbaren Druckeinrichtung kraftbeaufschlagbar sein. Durch entsprechende Steuerung der Druckeinrichtung kann eine Anpassung des auf den Volumenausgleichsbehälter ausgeübten Druckes an variierende Einzelfallerfordernisse vorgenommen werden.

Einer konstruktiv einfachen Umsetzung der Erfindung dient es, daß - wie im Falle einer weiteren Variante der erfindungsgemäßen Laserbearbeitungsmaschine vorgesehen - der Volumenausgleichsbehälter sackartig ausgebildet ist.

Zur Vermeidung von Strömungsverlusten steht das Gasausgleichsvolumen in weiterer Ausgestaltung der Erfindung mit dem Gasraum über einen Strömungskanal in Strömungsverbindung, dessen Querschnittsfläche eine Größe von wenigstens 10% der Größe der Querschnittsfläche, gegebenenfalls der maximalen Querschnittsfläche, des Gasausgleichsvolumens besitzt.

Nachfolgend wird die Erfindung anhand schematischer Darstellungen zu Ausführungsbeispielen näher erläutert. Es zeigen:
- Fig. 1: eine Laserbearbeitungsmaschine mit Gasraum und Gasausgleichsvolumen bei einer ersten Bearbeitungsstellung des Bearbeitungskopfs,
- Fig. 2: die Laserbearbeitungsmaschine gemäß Fig. 1 bei einer zweiten Bearbeitungsstellung des Bearbeitungskopfs und
- Fig. 3: eine weitere Ausführungsform einer Laserbearbeitungsmaschine mit Gasraum und Gasausgleichsvolumen.

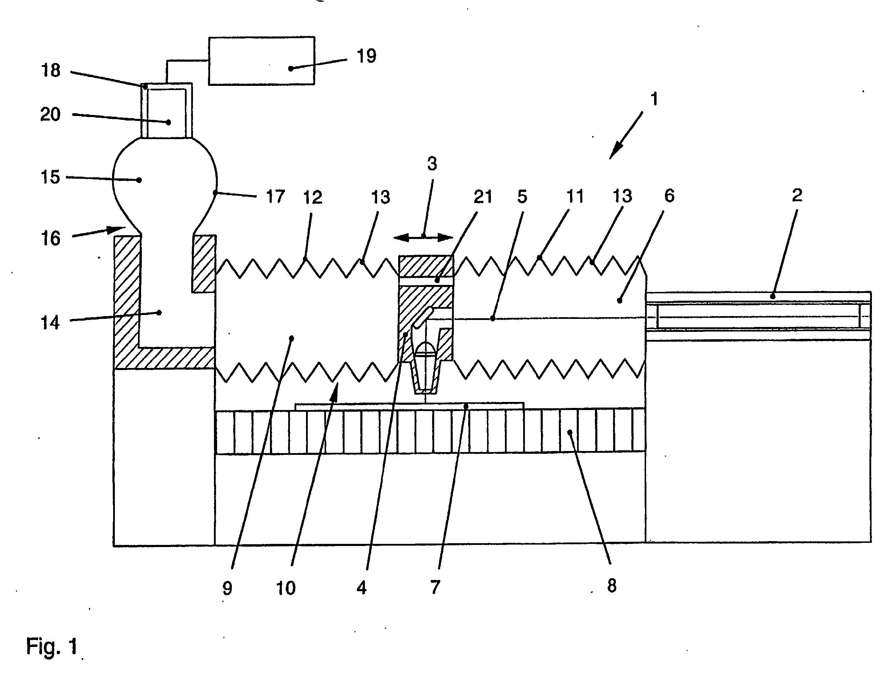

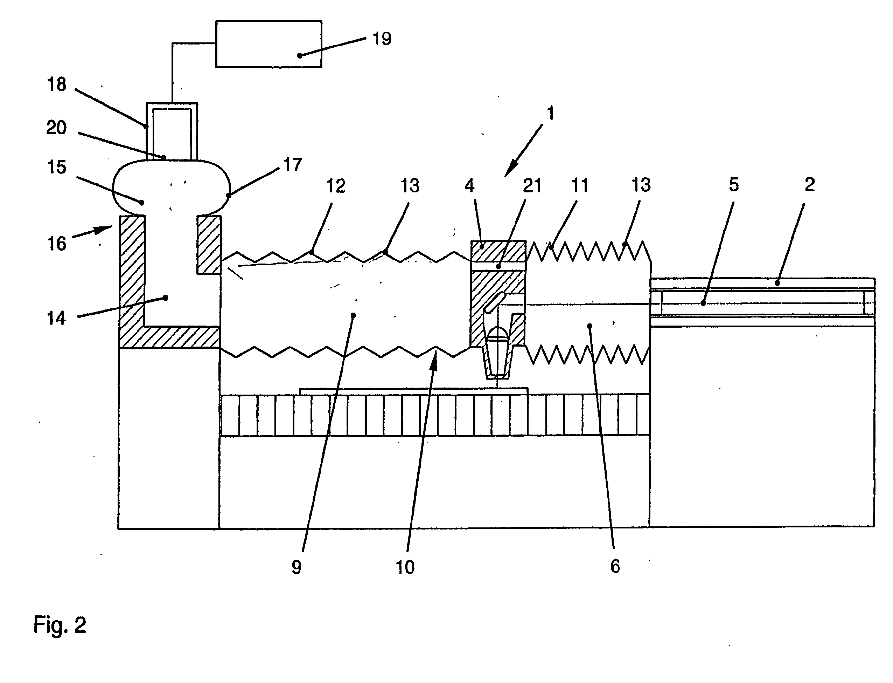

Gemäß den Figuren 1 und 2 umfaßt eine Laserbearbeitungsmaschine 1 einen Lasergenerator 2 sowie einen relativ dazu in Richtung eines Doppelpfeils 3 bewegbaren Bearbeitungskopf 4. Ein mittels des Lasergenerators 2 erzeugter Laserstrahl 5 wird ausgehend von dem Lasergenerator 2 durch einen Strahlführungsraum 6 zu dem Bearbeitungskopf 4 geleitet und an diesem auf ein zu bearbeitenden Werkstück 7 in Form eines Blechs gelenkt, das auf einer Werkstückauflage 8 der Laserbearbeitungsmaschine 1 abgelegt ist.

Der Strahlführungsraum 6 bildet gemeinsam mit einem an der ihm gegenüberliegenden Seite des Bearbeitungskopfs 4 angeordneten Nebenraum 9 einen Gasraum 10, der mit reinem Stickstoffgas gefüllt ist. Der Strahlführungsraum 6 wird von einem Faltenbalg 11, der Nebenraum 9 von einem Faltenbalg 12 begrenzt. Die beiden Faltenbälge 11, 12 bilden die Gasraumwand und bestehen jeweils aus einer Aneinanderreihung flexibler Falten 13.

Der Nebenraum 9 ist über einen Strömungskanal 14 mit einem Gasausgleichsvolumen 15 verbunden. Das Gasausgleichsvolumen 15 befindet sich im Innern eines sackartigen Volumenausgleichsbehälters 16 mit einer verformbaren Behälterwand 17. Letztere wird mittels einer Druckeinrichtung 18 von außen kraftbeaufschlagt. Der Steuerung der Druckeinrichtung 18 hinsichtlich der von dieser auf die Behälterwand 17 ausgeübten Kraft dient eine Drucksteuereinrichtung 19. Alternativ zu der steuerbaren Druckeinrichtung 18 ist ein die Behälterwand 17 kraftbeaufschlagendes und in den Figuren 1 und 2 gestrichelt angedeutetes Auflagegewicht 20 vorgesehen. Ein Überströmkanal 21 an dem Bearbeitungskopf 4 verbindet den Strahlführungsraum 6 mit dem Nebenraum 9 und über diesen sowie den Strömungskanal 14 mit dem Gasausgleichsvolumen 15. Der Gasraum 10 ist ebenso wie das Gasausgleichsvolumen 15 gegen die Umgebung der Laserbearbeitungsmaschine 1 abgeschlossen. Gasraum 10 und Gasausgleichsvolumen 15 bilden daher ein geschlossenes System, in das allerdings zum Ausgleich von Leckageverlusten Gas, sprich: reines Stickstoffgas, aufgegeben werden kann.

Wird der Bearbeitungskopf 4 beispielsweise im Laufe der Bearbeitung des Werkstückes 7 von seiner Lage gemäß Figur 1 in der Abbildung nach rechts verschoben, so wird die Wand des Faltenbalges 11 gefaltet, und die betreffenden Falten 13 verengen sich. Mit der beschriebenen Faltung des Faltenbalges 11 einher geht ein Entfalten des Faltenbalges 12, dessen Falten 13 sich dementsprechend öffnen. Gas strömt aus dem Faltenbalg 11 durch den Überströmkanal 21 in den Faltenbalg 12. Am Ende der Verfahrbewegung des Bearbeitungskopfs 4 ergibt sich die in Figur 2 dargestellte Situation. Gegenüber der Ausgangslage gemäß Figur 1 haben sich die Volumina der Falten 13 des Faltenbalges 11 weniger stark verkleinert als sich die Volumina der Falten 13 des Faltenbalges 12 vergrößert haben. Das Gesamtvolumen der Falten 13 der Faltenbälge 11 und 12 ist somit bei der in Figur 2 gezeigten Position des Bearbeitungskopfes 4 größer als das entsprechende Volumen bei der in Figur 1 gezeigten Stellung des Bearbeitungskopfs 4. Infolgedessen hat sich das Volumen des Gasraums 10 gemäß Figur 2 gegenüber den in Figur 1 gezeigten Verhältnissen vergrößert. Das Differenzvolumen wurde durch Gas des Gasausgleichsvolumens 15 aufgefüllt. Die Größe des Gasausgleichsvolumens 15 hat daher gegenüber dem Ausgangszustand gemäß Figur 1 abgenommen. Der Innendruck des Gasraums 10 konnte durch den beschriebenen Volumenausgleich konstant gehalten werden und besitzt bei der Position des Bearbeitungskopfs 4 gemäß Figur 2 denselben Wert wie bei der Position des Bearbeitungskopfs 4 gemäß Figur 1. Das Auflagegewicht 20, das die Behälterwand 17 des Volumenausgleichsbehälters 16 kraftbeaufschlagt, hat sich entsprechend der Verkleinerung des Gasausgleichsvolumens 15 gegenüber seiner Ausgangslage abgesenkt.

Verfährt der Bearbeitungskopf 4 von seiner Lage gemäß Figur 2 in die in Figur 1 dargestellte Position zurück, so ergibt sich in Analogie zu dem Vorstehenden eine Verkleinerung des Volumens des Gasraums 10. Infolge dieser Volumenverkleinerung strömt Gas aus dem Gasraum 10 zu dem Gasausgleichsvolumen 15 hin ab. Der Druck im Innern das Gasraums 10 bleibt infolgedessen konstant; das Gasausgleichsvolumen 15 besitzt wieder seine Ausgangsgröße, und das Auflagegewicht 20 nimmt gegebenenfalls wieder seine Ausgangsposition ein.

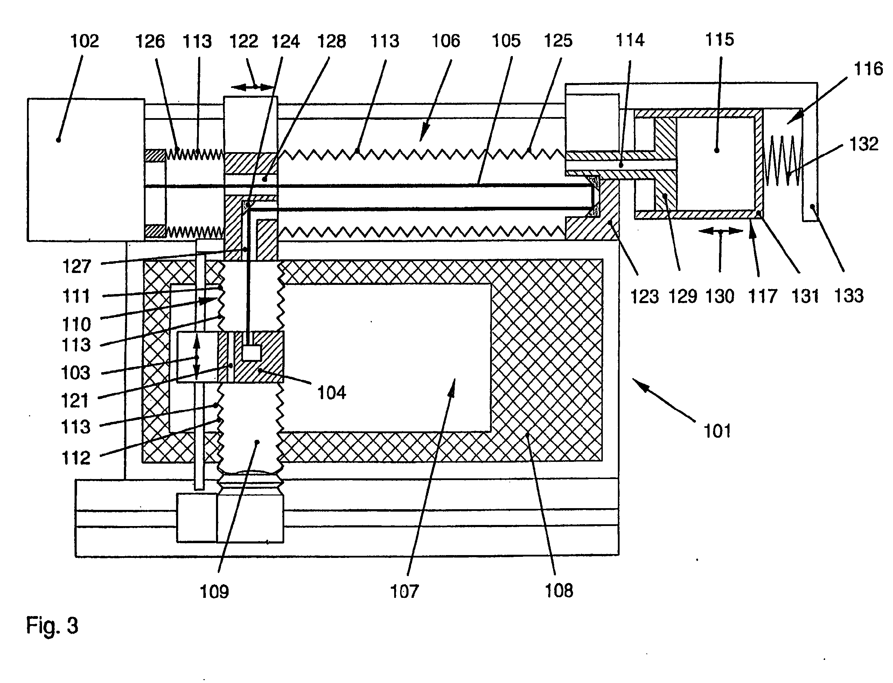

An einer Laserbearbeitungsmaschine 101, wie sie Figur 3 zeigt, ist ein Bearbeitungskopf 104 zweiachsig,nämlich in Richtung eines Doppelpfeils 103 sowie senkrecht dazu in Richtung eines Doppelpfeils 122,verfahrbar. Ein Laserstrahl 105 wird ausgehend von einem Lasergenerator 102 über eine erste Strahlumlenkungseinrichtung 123 sowie eine zweite Strahlumlenkungseinrichtung 124 zu dem Bearbeitungskopf 104 geleitet und dort zu einem Werkstück 107 hin umgelenkt. Das Werkstück 107 ruht auf einer ortsfesten Werkstückauflage 108.

Ein Strahlführungsraum 106 wird begrenzt durch insgesamt drei Faltenbälge, nämlich durch einen zwischen der zweiten Strahlumlenkungseinrichtung 124 und dem Bearbeitungskopf 104 angeordneten Faltenbalg 111, einen sich zwischen der ersten Strahlumlenkungseinrichtung 123 und der zweiten Strahlumlenkungseinrichtung 124 erstreckenden Faltenbalg 125 sowie einen den Lasergenerator 102 mit der zweiten Strahlumlenkungseinrichtung 124 verbindenden Faltenbalg 126. Ein Nebenraum 109 ist an der dem Faltenbalg 111 gegenüberliegenden Seite des Bearbeitungskopfs 104 vorgesehen und steht mit dem Innern des Faltenbalgs 111 über einen Überströmkanal 121 in Verbindung. Die Verbindung zwischen dem Innern der Faltenbälge 111, 125 wird über einen Verbindungskanal 127 an der zweiten Strahlumlenkungseinrichtung 124 hergestellt. Ein Durchtritt 128 der zweiten Strahlumlenkungseinrichtung 124 schafft eine Verbindung zwischen dem Innenraum des Faltenbalges 125 und dem Innenraum des Faltenbalges 126. Als Begrenzung des Nebenraums 109 dient ein Faltenbalg 112. Der Strahlführungsraum 106 und der Nebenraum 109 bilden einen Gasraum 110. Sämtliche Faltenbälge 111, 112, 125, 126 sind durch Aneinanderreihung von flexiblen Falten 113 gebildet.

In den Innenraum des Faltenbalges 125 mündet ein Strömungskanal 114, welcher den Gasraum 110 mit einem Gasausgleichsvolumen 115 verbindet. Das Gasausgleichsvolumen 115 befindet sich im Innern eines Volumenausgleichsbehälters 116. Dieser besitzt eine Behälterwand 117 mit einem feststehenden Teil 129 sowie einem relativ dazu in Richtung eines Doppelpfeils 130 bewegbaren Teil 131. Mittels einer Druckfeder 132 wird der bewegbare Teil 131 der Behälterwand 117 kraftbeaufschlagt. Die Druckfeder 132 ist mit ihrem dem Volumenausgleichsbehälter 116 gegenüberliegenden Ende an einem maschinenfesten Widerlager 133 abgestützt. Sowohl der Gasraum 110 als auch der Volumenausgleichsbehälter 116 enthält reines Stickstoffgas. Auch der Gasraum 110 sowie das Gasausgleichsvolumen 115 bilden ein gegenüber der Umgebung der Laserbearbeitungsmaschine 101 geschlossenes System, dem lediglich zum Ausgleich von Leckageverlusten Stickstoffgas zuzuführen ist.

Entsprechend der vorstehend zu den Figuren 1 und 2 im einzelnen beschriebenen Art und Weise dient das Gasausgleichsvolumen 115 der Vergleichmäßigung des in dem Gasraum 110 herrschenden Innendruckes. Das Volumen des Gasraumes 110 ist größenmäßigen Schwankungen unterworfen, die sowohl auf die Bewegung des Bearbeitungskopfes 104 in Richtung des Doppelpfeils 103 als auch auf die Bewegung des Bearbeitungskopfes 104 an Richtung des Doppelpfeils 122 zurückzuführen sind. Mit der Bewegung des Bearbeitungskopfes 104 in Richtung des Doppelpfeils 122 zwangsläufig verbunden ist eine entsprechende Bewegung der mit dem Bearbeitungskopf 104 gekoppelten zweiten Strahlumlenkungseinrichtung 124. Infolge der mit der Bewegung des Bearbeitungskopfes 104 einhergehenden Faltung bzw. Entfaltung der die Gasraumwand bildenden Faltenbälge 111, 112, 125, 126 nimmt die Größe des Gasraumvolumens und mit dieser die Größe des Gasausgleichsvolumens 115 zu oder ab, was wiederum zu einer Verlagerung des bewegbaren Teils 131 der Behälterwand 117 des Volumenausgleichsbehälters 116 gegenüber deren feststehendem Teil 129 in Richtung des Doppelpfeils 130 führt.

## Patentansprüche

1. Laserbearbeitungsmaschine mit wenigstens einem Lasergenerator (2,102), wenigstens einem relativ dazu bewegbaren Bearbeitungskopf (4,104) sowie einem ein Gasvolumen enthaltenden und mit einem Gasausgleichsvolumen (15,115) in Strömungsverbindung stehenden Gasraum (10,110), der von einem Strahlführungsraum (6,106) für den Laserstrahl (5,105) und von einem Nebenraum (9,109) gebildet ist und der wenigstens zum Teil von einer faltbaren und mit der Relativbewegung von Bearbeitungskopf (4,104) und Lasergenerator (2,102) ge- und/oder entfalteten Gasraumwand (11,12;111, 112,125,126) begrenzt ist, **dadurch gekennzeichnet, daß** der Gasraum (10,110) abgesehen von der Strömungsverbindung mit dem Gasausgleichsvolumen (15,115) im wesentlichen abgeschlossen und das Gasausgleichsvolumen (15,115) aufgrund der Faltung und/oder der Entfaltung der faltbaren Gasraumwand (11,12;111,112,125, 126) größenveränderlich ist.

2. Laserbearbeitungsmaschine nach Anspruch 1, **dadurch gekennzeichnet, daß** das Gasausgleichsvolumen (15) von wenigstens einem Volumenausgleichsbehälter (16) mit verformbarer Behälterwand (17) gebildet ist.

3. Laserbearbeitungsmaschine nach einem der vorhergehenden Ansprüche, **dadurch gekennzeichnet, daß** das Gasausgleichsvolumen (115) von wenigstens einem Volumenausgleichsbehälter (116) gebildet ist, an welchem zumindest ein Teil (129,131) der Behälterwand (117) relativ zu wenigstens einem anderen Teil (129,131) der Behälterwand (117) beweglich ist.

4. Laserbearbeitungsmaschine nach einem der vorhergehenden Ansprüche, **dadurch gekennzeichnet, daß** der Volumenausgleichsbehälter (16,116) an der Behälterwand (17,117) von außen kraftbeaufschlagt ist.

5. Laserbearbeitungsmaschine nach einem der vorhergehenden Ansprüche, **dadurch gekennzeichnet, daß** die Behälterwand (17) des Volumenausgleichsbehälters (16) mittels eines Auflagegewichts (20) kraftbeaufschlagt ist.

6. Laserbearbeitungsmaschine nach einem der vorhergehenden Ansprüche, **dadurch gekennzeichnet, daß** die Behälterwand (17) des Volumenausgleichsbehälters (16) mittels einer steuerbaren Druckeinrichtung (18) kraftbeaufschlagbar ist.

7. Laserbearbeitungsmaschine nach einem der vorhergehenden Ansprüche, **dadurch gekennzeichnet, daß** der Volumenausgleichsbehälter (16) sackartig ausgebildet ist.

8. Laserbearbeitungsmaschine nach einem der vorhergehenden Ansprüche, **dadurch gekennzeichnet, daß** das Gasausgleichsvolumen (15,115) mit dem Gasraum (10,110) über einen Strömungskanal (14,114) in Strömungsverbindung steht, dessen Querschnittsfläche eine Größe von wenigstens 10% der Größe der Querschnittsfläche, gegebenenfalls der maximalen Querschnittsfläche, des Gasausgleichsvolumens (15,115) besitzt.

## Claims

1. Laser processing machine having at least one laser generator (2, 102), at least one processing head (4, 104) which can be moved relative thereto and a gas space (10, 110) which contains a volume of gas and which is in fluid connection with a gas compensation volume (15, 115), and which is formed by a beam guiding space (6, 106) for the laser beam (5, 105) and by an adjacent space (9, 109), and which is at least partially delimited by a foldable gas space wall (11, 12; 111, 112, 125, 126) which is folded and/or unfolded with the relative movement of the processing head (4, 104) and laser generator (2, 102), **characterised in that** the gas space (10, 110), with the exception of the fluid connection to the gas compensation volume (15, 115), is substantially closed and the gas compensation volume (15, 115), owing to the folding and/or unfolding of the foldable gas space wall (11, 12; 111, 112, 125, 126), can be changed in terms of size.

2. Laser processing machine according to claim 1, **characterised in that** the gas compensation volume (15) is formed by at least one volume compensation container (16) with a deformable container wall (17).

3. Laser processing machine according to either of the preceding claims, **characterised in that** the gas compensation volume (115) is formed by at least one volume compensation container (116), on which at least a portion (129, 131) of the container wall (117) can be moved relative to at least another portion (129, 131) of the container wall (117).

4. Laser processing machine according to any one of the preceding claims, **characterised in that** force is applied to the container wall (17, 117) of the volume compensation container (16, 116) from the outer side.

5. Laser processing machine according to any one of the preceding claims, **characterised in that** force is applied to the container wall (17) of the volume compensation container (16) by means of a weight supported thereon (20).

6. Laser processing machine according to any one of the preceding claims, **characterised in that** force can be applied to the container wall (17) of the volume compensation container (16) by means of a controllable pressure device (18) .

7. Laser processing machine according to any one of the preceding claims, **characterised in that** the volume compensation container (16) is constructed in the manner of a bag.

8. Laser processing machine according to any one of the preceding claims, **characterised in that** the gas compensation volume (15, 115) is in fluid connection with the gas space (10, 110) via a flow channel (14, 114) whose cross-section surface-area has a size of at least 10% of the size of the cross-section surface-area, optionally the maximum cross-section surface-area, of the gas compensation volume (15, 115).

## Revendications

1. Machine d'usinage au laser comprenant au moins un générateur laser (2, 102), au moins une tête d'usinage (4, 104) mobile par rapport à celui-ci ainsi qu'une chambre à gaz (10, 110) contenant un volume de gaz et en liaison fluidique avec un volume de compensation de gaz (15, 115), qui est formée par une chambre de guidage de faisceau (6, 106) pour le faisceau laser (5, 105) et par une chambre voisine (9, 109) et qui est limitée au moins en partie par une paroi de chambre à gaz (11, 12 ; 111, 112, 125, 126) plissable et plissée et/ou déplissée par le mouvement relatif de la tête d'usinage (4, 104) et du générateur laser (2, 102), **caractérisée en ce que** la chambre à gaz (10, 110), hormis la liaison fluidique avec le volume de compensation de gaz (15, 115), est essentiellement fermée et le volume de compensation de gaz (15, 115) a une grandeur variable en raison du plissage et/ou du déplissage de la paroi de chambre à gaz (11, 12 ; 111, 112, 125, 126) plissable.

2. Machine d'usinage au laser selon la revendication 1, **caractérisée en ce que** le volume de compensation de gaz (15) est formé par au moins un réservoir de compensation de volume (16) avec paroi de réservoir (17) déformable.

3. Machine d'usinage au laser selon l'une des revendications précédentes, **caractérisée en ce que** le volume de compensation de gaz (115) est formé par au moins un réservoir de compensation de volume (116) sur lequel au moins une partie (129, 131) de la paroi de réservoir (117) est mobile par rapport à au moins une autre partie (129, 131) de la paroi de réservoir (117).

4. Machine d'usinage au laser selon l'une des revendications précédentes, **caractérisée en ce que** le réservoir de compensation de volume (16, 116) est sollicité en force par l'extérieur sur la paroi de réservoir (17, 117).

5. Machine d'usinage au laser selon l'une des revendications précédentes, **caractérisée en ce que** la paroi de réservoir (17) du réservoir de compensation de volume (16) est sollicitée en force au moyen d'un poids de charge (20).

6. Machine d'usinage au laser selon l'une des revendications précédentes, **caractérisée en ce que** la paroi de réservoir (17) du réservoir de compensation de volume (16) est sollicitée en force au moyen d'un dispositif de pression (18) commandable.

7. Machine d'usinage au laser selon l'une des revendications précédentes, **caractérisée en ce que** le réservoir de compensation de volume (16) est conçu en forme de sac.

8. Machine d'usinage au laser selon l'une des revendications précédentes, **caractérisée en ce que** le réservoir de compensation de volume (15, 115) est en liaison fluidique avec la chambre à gaz (10, 110) par l'intermédiaire d'un canal d'écoulement (14, 114) dont la surface de section possède une grandeur égale à au moins 10 % de la grandeur de la surface de section, le cas échéant de la surface de section maximale, du volume de compensation de gaz (15, 115).
